# EUROPÄISCHE PATENTANMELDUNG

(11) **EP 1 541 879 A1**
(43) Veröffentlichungstag der Anmeldung: **15.06.2005**
(21) Anmeldenummer: 04028901.9
(22) Anmeldetag: 07.12.2004
(51) Int. Cl.: F16B 12/12, F16B 12/04

(54) **Verdeckte formschlüssige Verbindung**

(30) Priorität: 10.12.2003 IT BZ20030060
(71) Anmelder: GASSER JOSEF & FIGLI SNC DI GASSER JOSEF & C, 39058 Sarentino, (Bolzano) (IT)
(72) Erfinder: Gasser, Gottfried, 39058 Sarentino (BZ) (IT); Gasser, Helmut, 39058 Sarentino (BZ) (IT)
(74) Vertreter: Oberosler, Ludwig

(57) **Zusammenfassung**

Verdeckte formschlüssige Verbindung von der Art Schlitz - Zapfenverbindung oder Dübelverbindung, wobei mittels einem einzigen Zapfen oder Dübel (3, 4) mindestens drei Bauelemente (1, 2, 2a) unter sich lösbar oder, unter Verwendung von Kleber, fest verbunden werden, wobei der Zapfen (3) an einem der Bauelemente (1) angeformt, bzw. der Dübel (4) in diesen eingesetzt ist während die anderen beiden Bauelemente (2, bzw. 2a) ein entsprechendes Zapfenloch aufweisen und in, zueinander angewinkelter oder ausgerichteter, Position mit den entsprechenden Stirnflächen gegenseitig anliegend aufgesteckt sind wobei normalerweise die Verbindungslinie mit der eventuell einzigen Symmetrieachse (3s, 4s) des Querschnittes des Zapfens (3), bzw. des Dübels (4), zusammenfällt.

## Beschreibung

Um eine Eckverbindung zwischen zwei oder mehreren Holzteilen zu schaffen ist der Einsatz von Passverbindungen unterschiedlicher Ausformung bekannt. Für die Verbindung von Hölzern welche die Form von Leisten haben oder deren Längserstreckung, im Verhältnis zum quadratischen oder rechteckigen Querschnitt, größer ist, ist es bekannt eine Zapfenverbindung zu verwenden. In diesem Fall kann das Zapfenloch durchgehender oder blinder Art sein, wobei im letzteren Fall eine verdeckte Verbindung erreicht wird. Eine Verbindungsart welche bezüglich der Zapfenverbindung gleichartig ist, ist jene welche unter Einsatz von Dübeln entsteht und als Dübelverbindung bekannt ist; auch in diesem Fall besteht die Möglichkeit einer einfacheren Ausführung wobei die Dübel von außen sichtbar sind oder einer verfeinerten Ausführung mit verdeckten Dübeln. Es sind weiters Dübel bekannt welche normalerweise in Kunststoff hergestellt sind und den Querschnitt eines doppelten Schwalbenschwanzes aufweisen, diese Dübel werden ausschließlich für die Verbindung zweier Elemente z.B. in Gehrung verwendet; dabei ist bei diesen Dübelverbindungen nicht eine Verbindung quer zum doppel-schwalbenschwanzförmigen Querschnitts des Dübels vorgesehen.

Die bekannte Technik der Schwalbenschwanzverbindung und Dübelverbindung sieht z.B. nicht eine Verbindung von drei Elementen mittels eines einzigen Zapfens, bzw. eines einzigen Dübels, vor. In der Möbelherstellung oder in der Herstellung zusammengesetzter Holzgegenstände ist es also für die Realisierung von Verbindungen bei welchen die zusammengefügten Bauelemente sich in drei unterschiedliche Richtungen erstrecken, z.B. um untereinander jeweils Winkel von 90° einzunehmen, oder bei welchen die Bauelemente sich nach zwei unterschiedlichen Ausdehnungen erstrecken wobei zwei Elemente kopfseitig gemäß einer gemeinsamen Längserstreckung verbunden sind, notwendig mindestens zwei Zapfenlöcher und zwei Zapfen vorzusehen, bzw. mindestens zwei Dübel, meistens vier Dübel, vorzusehen. Abgesehen von der komplexeren Herstellungsart ermöglichen diese bekannten Verbindungen, auch bei verdeckten Verbindungselementen, nicht die Verwirklichung von Fugen eleganter Linienführung.

Die Erfindung stellt sich die Aufgabe eine verdeckte formschlüssige Verbindung zu schaffen welche die Zusammenfügung dreier, sich in einer gemeinsamen Ebene oder in zwei unterschiedlichen Ebenen erstreckender, Bauteile mittels eines einzigen zapfenförmigen oder dübelförmigen Verbindungselementes ermöglicht.

Zur Lösung dieser Aufgabe schlägt die Erfindung den Einsatz eines Zapfens oder Dübels mit einem vier Vorsprünge aufweisenden Querschnitt vor, welcher in Zapflöcher passt die dem halben Zapfen-, bzw. Dübelquerschnitt entsprechen. Die vier Vorsprünge des Querschnittes des Zapfens, bzw. Dübels, folgend einfach als "Steckteil" bezeichnet, sind erfindungsgemäß nach mindestens einer Symmetrieachse, oder auch nach zwei zueinander senkrechten Symmetrieachsen, angeordnet. Zwischen dem Paar der Vorsprünge welche beidseitig in Bezug auf die eventuell einzige Symmetrieachse angeordnet sind, ist ein Verbindungsbereich vorgesehen welcher sich zwischen zwei, mehr oder weniger ausgeprägten; "Einbuchtungen" erstreckt.

Natürlich können im Falle eines Zapfens die Einbuchtungen nicht sehr ausgeprägt sein um nicht den Querschnitt zu sehr zu schwächen und um die Haltbarkeit und die Funktionstüchtigkeit der Verbindung zu sichern, während im Falle eines eventuell aus Kunststoff im Extrusionsverfahren oder aus einem anderen, im Vergleich zum Holz, homogenerem und widerstandsfähigerem Werkstoff gefertigten Dübels, die besagten Einbuchtungen tiefer ausgeformt sein können.

Während kopfseitig an einem der drei zu verbindenden Bauelemente das Zapfenloch, z.B. durch Fräsen, oder der Sitz für den Einsatz des Dübels mit der Längsachse übereinstimmend mit jener des Bauelementes eingearbeitet wird, werden an den zwei übrigen, mit dem ersten Bauelement zu verbindenden Bauelementen, die Zapfenlöcher in einer Position so eingearbeitet, dass normalerweise eine Verbindungslinie erreicht wird welche sich zwischen diesen beiden Elementen und mit der, eventuell einzigen, Symmetrieachse des Steckteiles zusammenfallend, erstreckt. Besagte Zapfenlöcher werden die Form von Ausnehmungen haben welche wesentlich dem halben Querschnitt des Steckteiles entsprechen. Im Wesentlichen werden es die geneigten Flächen der Einbuchtungen und die entsprechenden Flächen in den Zapfenlöchern sein, welche eine funktionstüchtige Verbindung sichern und ein gegenseitiges Zusammenziehen, zwecks Schaffung einer regelmäßigen und satt anliegenden Fuge, bewirken. Während also die besagten, eventuell konischen, bzw. entsprechend angewinkelten, Flächen erfindungsgemäß eine Keilwirkung, bzw. die Wirkung einer schiefen Ebene ausüben um das Zusammenziehen der mit Zapfenloch versehenen Elemente in Richtung Symmetrieachse des Steckteiles zu erreichen, können für die übrigen Flächen größere Bearbeitungstolleranzen vorgesehen sein. Gemäß einer Weiterentwicklung der Erfindung kann die Fuge zwischen den beiden fluchtenden oder angewinkelten, durch die Wirkung der Vorsprünge am Querschnitt des Zapfens oder Dübels, zusammengehaltenen Elementen, auch derart geneigt sein, dass die Verbindungsfläche eines Elementes von der entsprechenden Verbindungsfläche des anderen Elementes überdeckt wird.

Die Erfindung schließt nicht aus, dass das dübelförmige Steckteil auch seitlich an einem Bauelement angebracht ist, z.B. mit seiner Längsachse quer zum Verlauf der Fasern des Elementes. Die eher abgerundete Form mit Ihren Vorsprüngen ermöglicht erfindungsgemäß eine einfache Herstellung des Steckteiles sowie der Zapfenlöcher, es wird jedoch nicht ausgeschlossen, dass der Querschnitt eine weniger abgerundete Form aufweist und z.B. die Form eines Doppel-Schwalbenschwanzes einnimmt welche im Falle eines Dübels einfach herstellbar ist und wobei die entsprechenden Zapfenlöcher abgerundete Innenkanten aufweisen können welche weiter ausgefräst sind um nicht mit den Kanten an den Schwalbenschwanzenden zu interferieren.

Die Erfindung schließt weiters nicht den Einsatz eines Steckteiles aus, deren Ende über die kopfseitig verbundenen Elemente vorsteht, um die Verbindung eines weiteren mit entsprechenden Zapflöchern versehenen Elementepaares zu ermöglichen.

Der Querschnitt des erfindungsgemäßen Steckteiles kann, außer den beiden beschriebenen Einbuchtungen, auch vier Einbuchtungen aufweisen wodurch ein wesentlich kreuz- oder X-förmiger Querschnitt entsteht, in diesem Fall können die Zapfenlöcher entsprechende Form aufweisen oder auch eine Form aufweisen welche im Bereich der zusätzlichen Einbuchtungen nicht diesen entspricht indem sie in diese eindringt.

Die Erfindung wird anhand einiger in den beigelegten Zeichnungen schematisch dargestellter vorzuziehender Ausführungsbeispiele einer erfindungsgemäßen verdeckten formschlüssigen Verbindung näher erklärt, dabei erfüllen die Zeichnungen rein erklärenden, nicht begrenzenden Zweck.

Die Fig. 1 zeigt in perspektivischer Darstellung eine erfindungsgemäße Verbindung mit kopfseitig aus dem vertikalen Bauelement ausgearbeitetem Zapfen welcher die gegenseitig anliegenden Kopfenden zweier, in Gehrung zugeschnittener, einen Winkel von 90° bildender, Bauelemente verbindet.

Die Fig. 2 zeigt in perspektivischer Darstellung eine erfindungsgemäße Verbindung mit kopfseitig aus dem vertikalen Bauelement ausgearbeitetem Zapfen welcher die gegenseitig anliegenden Kopfenden zweier, gemäß Längserstreckung fluchtender, horizontaler Bauelemente verbindet.

Die Fig. 3 zeigt in perspektivischer Darstellung eine erfindungsgemäße Verbindung mit einem, gemäß zwei zueinander senkrechten Achsen, symmetrischen, kopfseitig am vertikalen Bauelement eingesetzten, Dübel welcher zwei kopfseitig gegenseitig anliegende Enden zweier, gemäß ihrer Längserstreckung fluchtender, Bauelemente verbindet.

Die Fig. 4 zeigt in perspektivischer Darstellung eine erfindungsgemäße Verbindung mit einem, gemäß nur einer Achse, symmetrischen Dübel welcher stirnseitig am vertikalen Bauelement eingesetzt ist und welcher die stirnseitig anliegende Enden zweier, in Gehrung zugeschnittener, horizontaler Bauelemente verbindet welche einen Winkel von 90° bilden.

Die Fig. 5 zeigt schematisch die Umrisse zweier Querschnitte eines erfindungsgemäßen Zapfens oder eines Dübels mit zwei, zueinander senkrechten, Symmetrieachsen und mit mehr und weniger ausgeprägten Einbuchtungen.

Die Fig. 6 zeigt den Umriss des Querschnittes eines erfindungsgemäßen Zapfens oder Dübels mit einer einzigen Symmetrieachse.

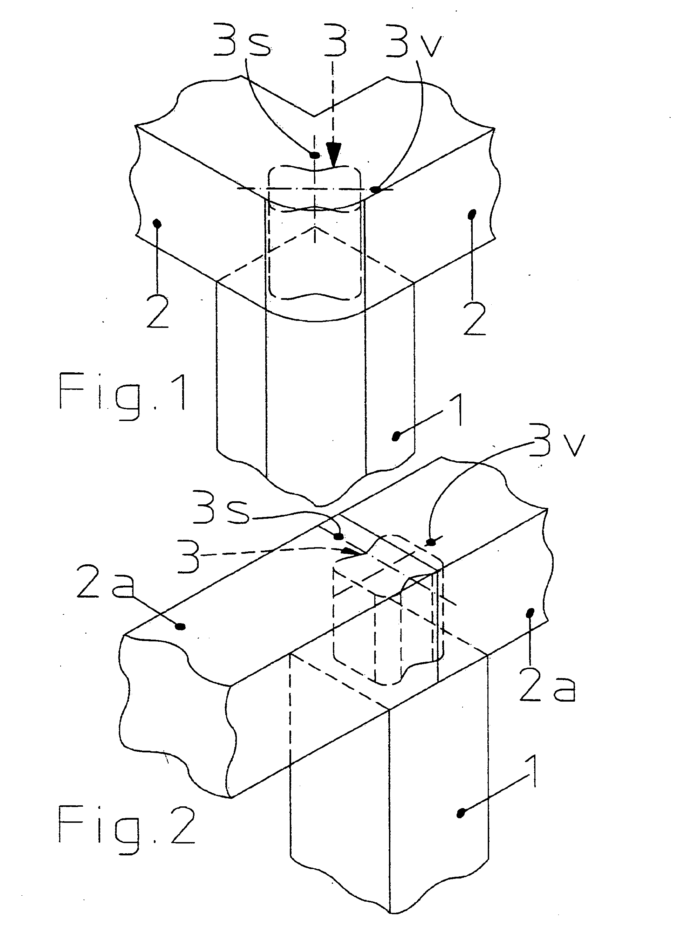

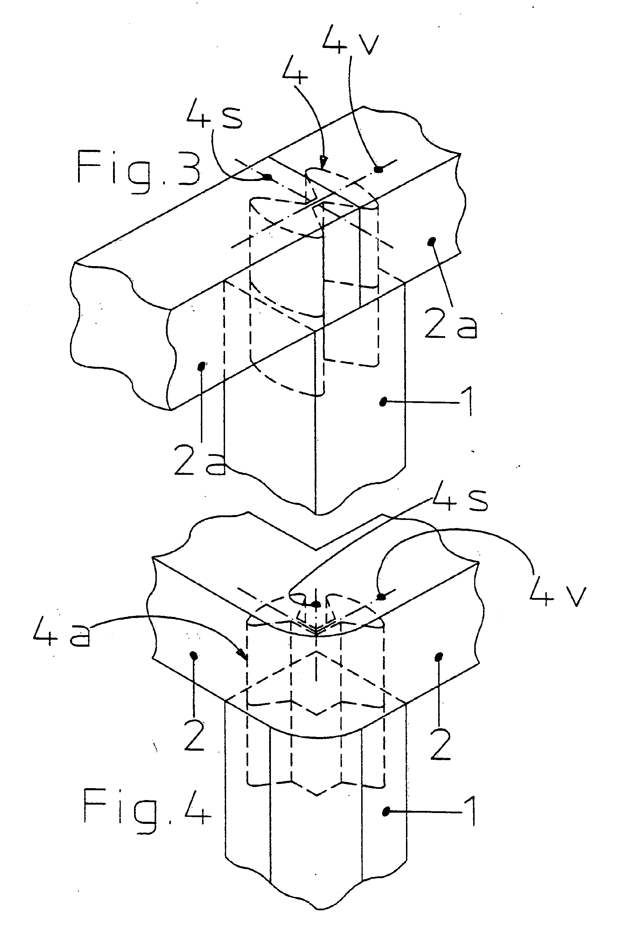

An den vertikalen Bauelementen 1 einer Struktur sind im Endbereich, z.B. durch Fräsen, die Zapfen 3 ausgeformt oder Dübel 4 eingesetzt. Besagte Steckteile 3, 4 haben einen Querschnitt mit Vorsprüngen, mit Doppel-Schwalbenschwanz, mit Kreuz- oder X-Form und einen Querschnitt welcher mindestens nach einer Achse 3s, 4s, oder nach zwei zueinander senkrechten Achsen 3s, 4s; 3v 4v, symmetrisch ist. Die Position der eventuell einzigen Symmetrieachse 3s, 4s bestimmt normalerweise die Verbindungslinie zwischen den Enden der anderen zwei zu verbindenden Bauelemente 2, 2a welche unter sich in Gehrung (Fig. 1, 4), oder zueinander in Längserstreckung ausgerichtet (Fig. 2, 3), verbunden sind. Aus diesem Grund ist vorteilhafterweise, im Falle einer Verbindung in Gehrung, das Steckelement 3, 4, in Bezug auf den Querschnitt des vertikalen Bauelementes 1, mit der Symmetrieachse übereinstimmend oder zusammenfallend mit der Diagonale angeordnet, während im Falle einer Verbindung welche mit der Symmetrieachse 3s, 4s fluchtet ist die Verbindungslinie zusammenfallend mit oder parallel zur entsprechenden Symmetrieachse des Querschnittes des Bauelementes 1 angeordnet.

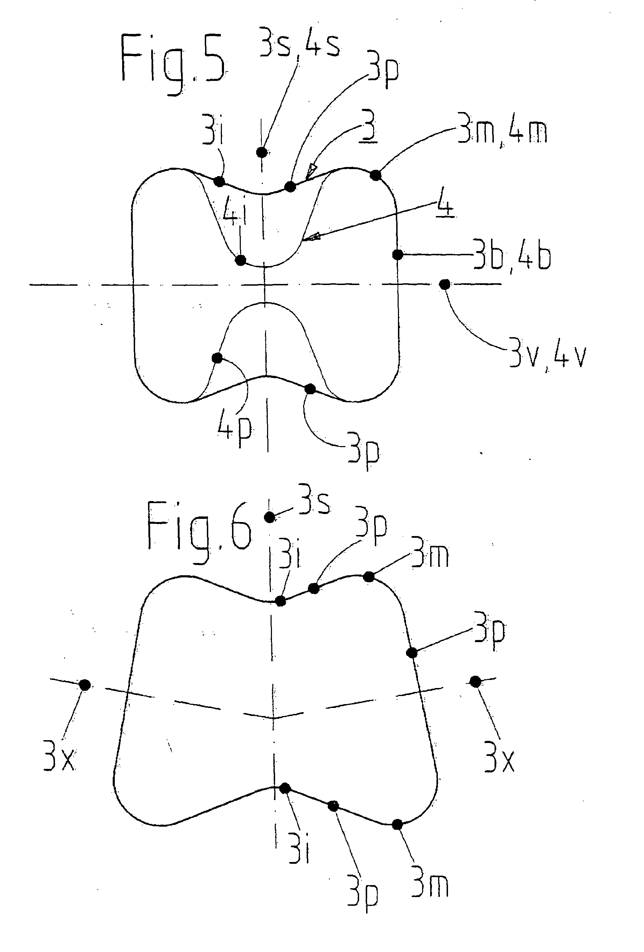

Der Verlauf des Umrisses der Querschnitte der erfindungsgemäßen Steckelemente 3, 4 ist durch die, sich gegenüberliegend angeordneten, Einbuchtungen 3i, 4i gekennzeichnet welche entsprechend der eventuell einzigen Symmetrieachse 3s, 4s angeordnet sind (Fig. 5). Diese Einbuchtungen 3i, 4i bestimmen, zusammen mit der Anordnung der Paare der Vorsprünge 3m, 4m, die angewinkelten Flächen 3p, 4p welche durch Ihre Neigung, zusammen mit den entsprechenden angewinkelten Flächen in den Zapfenlöchern, welche in entsprechender Position an den Endbereichen der horizontalen Bauelemente 2, 2a eingearbeitet sind, eine Zugwirkung in Richtung Symmetrieachse 3s, 4s ausüben wodurch sie ein sattes Anliegen zwischen den Stirnflächen der beiden verbundenen Bauelemente 2, 2a bewirken.

Falls die erfindungsgemäße Verbindung ohne Leim oder ohne zusätzliche Verbindungselemente, für den Bau von Bettgestellen oder allgemein für Strukturen welche dynamischen Belastungen ausgesetzt werden, verwendet wird, können die Steckelemente 3, 4 und/oder die entsprechenden Zapfenlöcher mit bekannten Produkten behandelt werden welche geeignet sind die Bildung von Geräuschen zu verhindern. Die selbe Wirkung kann erzielt werden indem Bereiche mit Laminaten oder zwischengelegten Werkstoffen wie Filz, Kork, Gewebe, Kunststoff (z.B. Teflon) verkleidet sind. Der zwischengelegte Werkstoff, insbesondere wenn es sich um Kunststoff handelt, kann die Form einer Buchse, eines Bechers eines Käfigs, usw. haben.

Wenn das Steckteil 3, 4 die Form eines Dübels hat so ist dieser leicht aus Kunststoff im Extrudierverfahren oder als Spritzgussteil herstellbar, wobei er im letzteren Fall, eventuell am Teil welcher stirnseitig am Bauelement 1 eingesetzt wird, einen anderen Querschnitt, vorteilhaft einen runden Querschnitt, aufweisen kann. In den obgenannten Fällen kann der Dübel überdies eher tiefe Einbuchtungen 4i aufweisen wobei er immer noch einen beachtlichen Widerstand gegen ein Spalten in diesem Bereich entsprechend der Symmetrieachse 4s bietet.

## Patentansprüche

1. Verdeckte formschlüssige Verbindung von der Art Schlitz - Zapfenverbindung oder Dübelverbindung, **dadurch gekennzeichnet, dass** mittels einem einzigen Zapfen oder Dübel (3, 4) mindestens drei Bauelemente (1, 2, 2a) unter sich lösbar oder, unter Verwendung von Kleber, fest verbunden werden, wobei der Zapfen (3) an einem der Bauelemente (1) angeformt, bzw. der Dübel (4) in diesen eingesetzt ist während die anderen beiden Bauelemente (2, bzw. 2a) ein entsprechendes Zapfenloch aufweisen und in, zueinander angewinkelter oder ausgerichteter, Position mit den entsprechenden Stirnflächen gegenseitig anliegend aufgesteckt sind wobei normalerweise die Verbindungslinie mit der eventuell einzigen Symmetrieachse (3s, 4s) des Querschnittes des Zapfens (3), bzw. des Dübels (4), zusammenfällt.

2. Verdeckte formschlüssige Verbindung gemäß Anspruch 1, **dadurch gekennzeichnet, dass** der Zapfen (3), bzw. der Dübel (4) einen Querschnitt mit Vorsprüngen (3m, 4m) aufweist, wobei die einander gegenüber liegenden und zwischen je zwei Paaren der besagten Vorsprünge angeordneten Einbuchtungen (3i, 4i), angewinkelte Flächen (3p, 4p) bilden welche eventuell eine leichte Konizität oder eine in Richtung Grundfläche des Zapfens zunehmende Neigung aufweisen.

3. Verdeckte formschlüssige Verbindung gemäß Anspruch 1, **dadurch gekennzeichnet, dass** der Zapfen (3), bzw. der Dübel (4) den Querschnitt eines doppelten Schwalbenschwanzes aufweist.

4. Verdeckte formschlüssige Verbindung gemäß Anspruch 1, **dadurch gekennzeichnet, dass** der Zapfen (3), bzw. der Dübel (4), einen Kreuz-, bzw. X-förmigen Querschnitt aufweist.

5. Verdeckte formschlüssige Verbindung gemäß Anspruch 1, **dadurch gekennzeichnet, dass** die Zapfenlöcher welche dem halben Querschnitt des Zapfens (3), bzw. des Dübels (4) entsprechen, betreffend die geneigten Flächen (3p, 4p) und deren Position, bezogen auf die eventuell einzige Symmetrieachse (3s, 4s) welche mit der Verbindungsfuge der zwei mit Zapfenlöchern versehenen Bauelemente (2, 2a) zusammenfällt, innerhalb enger Toleranzen entsprechen, während die Form und die Maße der übrigen Bereiche auch nur innerhalb weiterer Tolleranzen entsprechen können.

6. Verdeckte formschlüssige Verbindung gemäß Anspruch 1, **dadurch gekennzeichnet, dass** die Verbindungsflächen der beiden Bauelemente (2, 2a) welche durch die Vorsprünge des Querschnittes des Zapfens (3) oder des Dübels (4) zusammengehalten werden, bezüglich der Längsachse des Zapfens oder Dübels, geneigt sind so dass die Verbindungsfläche des ersten Bauelementes (2, 2a) von der entsprechenden geneigten Fläche des zweiten, am Zapfen (3) oder am Dübel (4) aufgesteckten, Bauelementes (2, 2a) überdeckt wird.

7. Verdeckte formschlüssige Verbindung gemäß Anspruch 1, **dadurch gekennzeichnet, dass** der Dübel (4) am Bereich welcher in das Bauelement (1) eingesetzt ist anderen Querschnitt aufweist als am Bereich welcher die beiden verbleibenden, mit Zapfenlöchern versehenen, Bauelemente (2, 2a) zusammenhält.

8. Verdeckte formschlüssige Verbindung gemäß Anspruch 1, **dadurch gekennzeichnet, dass** am Zapfen (3), bzw. am Dübel (4) und/oder in den entsprechenden Zapflöchern, Elemente aus Filz, Gewebe, Kork oder Kunststoff vorgesehen sind um, im Falle dynamischer Belastungen, eine Geräuschbildung zu unterbinden.

9. Verdeckte formschlüssige Verbindung gemäß Anspruch 1, **dadurch gekennzeichnet, dass** die zwischen Zapfen (3), bzw. Dübel (4), und Zapfenlöcher eingelegten Elemente die Form einer Buchse, eines Bechers oder eines Käfigs haben.
